# EUROPEAN PATENT APPLICATION

(11) **EP 4 588 969 A1**
(43) Date of publication of application: **23.07.2025**
(21) Application number: 24152771.2
(22) Date of filing: 19.01.2024
(51) Int. Cl.: C08K 5/103, C08K 5/11, C08L 67/04, C09D 167/04, C09J 167/04

(54) **POLYHYDROXYALKANOATE PLASTISOL COMPOSITIONS**

(71) Applicant: Centexbel, 1000 Brussel (BE)
(72) Inventor: DEMEDTS, Brecht, 9000 Gent (BE); UYTTENDAELE, Willem, 9041 Oostakker (BE); VANNESTE, Myriam, 9881 Bellem (BE)
(74) Representative: Winger

(57) **Abstract**

This patent application pertains to a plastisol composition that includes a polyhydroxyalkanoate and a plasticizer. The polyhydroxyalkanoate can be selected from poly-3-hydroxybutyrate (PHB), poly(3-hydroxybutyrate-co-3-hydroxyvalerate) (PHBV), poly(3-hydroxybutyrate-co-4-hydroxybutyrate) (P3HB4HB), poly(3-hydroxybutyrate-co-3-hydroxyhexanoate) (PHBHHx), or combinations thereof. The plasticizer may be chosen from sucrose acetate isobutyrate, acetylated mono-, di-, and triglycerides, polymer-based esters of diacids, or their combinations, and is preferably biodegradable. The composition may also contain a crosslinker reactive with hydroxyl groups, such as polyisocyanates or polycarbodiimides functionalized with silanes. The ratio of plasticizer to polyhydroxyalkanoate ranges from 40:60 to 95:5 by weight, with the sum of both components constituting at least 50% of the composition's total weight. Additionally, the composition may include a diluting solvent that does not dissolve polyhydroxyalkanoate but is miscible with the plasticizer, such as ethanol, methyl ethyl ketone, or ethyl acetate. The plasticizer may also be a polymer with an Mn of at least 1000 g/mol. This plastisol composition is suitable for forming coatings and pressure-sensitive adhesives, with specific ratios of plasticizer to polyhydroxyalkanoate tailored for each application.

## Description

### Field of the Invention

The present invention relates to the field of polymer chemistry and materials science, specifically to plastisol compositions comprising polyhydroxyalkanoate powders and plasticizers, and their applications in various coating and adhesive processes.

### Background of the Invention

Polyhydroxyalkanoates (PHA) are a class of biodegradable polymers produced by microorganisms. They have attracted significant interest due to their potential as environmentally friendly alternatives to conventional plastics. PHAs can be produced in various forms, with different side-chain lengths that affect their material properties, such as flexibility and crystallization behavior. However, the use of PHA in traditional coating formulations presents several challenges.

One of the broad problems in the field is the difficulty in processing PHA due to its low thermal stability, which can lead to degradation during heating. Additionally, water-based formulations tend to foam, and its inherent brittleness can complicate the production of high-quality films. The slow crystallization rate of PHA also poses a challenge, as it can affect the mechanical properties and clarity of the final product.

Despite the progress made in the field, there remains a need for further advancements in the development of PHA formulations that can overcome these challenges. The industry continues to seek new compositions that can provide stable, high-quality films with desirable properties, while also being environmentally friendly and easy to process.

### Summary of the Invention

It is an object of embodiments of the present invention to provide stable plastisol formulations based on polyhydroxyalkanoate powders and plasticizers for various coating, printing, and dipping applications. This objective is accomplished by a plastisol composition containing a polyhydroxyalkanoate and a plasticizer according to the invention.

The invention pertains to the field of plastisol compositions, which are liquid mixtures that solidify upon heating to form plastic films. Plastisols are typically used in various applications such as coatings, adhesives, sealants, and inks. The primary components of a plastisol are a polymer powder and a plasticizer. The polymer powder is dispersed in the plasticizer, and upon heating, the polymer particles absorb the plasticizer, swell, and fuse together to form a continuous film.

In the first aspect, the present invention relates to a plastisol composition comprising a polyhydroxyalkanoate and a plasticizer.

In embodiments, the polyhydroxyalkanoate may be selected from the group consisting of poly-3-hydroxybutyrate (PHB), poly(3-hydroxybutyrate-co-3-hydroxyvalerate) (PHBV), poly(3-hydroxybutyrateco-4-hydroxybutyrate) (P3HB4HB), poly(3-hydroxybutyrate-co-3-hydroxyhexanoate) (PHBHHx) and combinations thereof. This embodiment provides the advantage of enabling the tailoring of the plastisol to desired material properties.

In embodiments, the plasticizer in the polyhydroxyalkanoate film may be selected from the group consisting of sucrose acetate isobutyrate, acetylated oils (e.g., mono-, di-, or triglycerides), polymer-based esters of diacids, triacetin, isosorbate esters, citrate esters, and combinations thereof. Preferably, the plasticizer in the polyhydroxyalkanoate film may be selected from the group consisting of sucrose acetate isobutyrate, acetylated oils (e.g., mono-, di-, or triglycerides), polymer-based esters of diacids, and combinations thereof. This is advantageous because these have a lower tendency to migrate. These are advantageous as they offer a good compatibility with PHA. The plastisol formulation resulting from the use of these plasticizers mitigate migration issues and offer good gelation and long-term stability. In particular, they are particularly good at preventing issues such as phase separation and plasticizer leaching, which can compromise the performance and durability of the plastisol. Furthermore, this embodiment offers the advantage of a wide selection of compatible plasticizers to tailor the plastisol's properties.

In embodiments, the plasticizer may be biodegradable. The advantage of this embodiment is the environmental benefit of using biodegradable components in the plastisol composition. Added to the fact that the plastisol of the present invention can be water-free or water-poor, this makes them particularly interesting due to environmental considerations.

In embodiments, the plastisol composition may further comprise a crosslinker reactive with hydroxyl groups. This embodiment provides the advantage of enhancing the mechanical strength and durability of the final product.

In embodiments, the crosslinker may be selected from polyisocyanates and polycarbodiimides functionalized with silanes. The advantage of this embodiment is the improved crosslinking efficiency and potential for additional functionality in the final product.

In embodiments, the ratio of plasticizer to polyhydroxyalkanoate may be in the range of 40:60 to 95:5 by weight. This embodiment allows for the adjustment of the plastisol's flexibility and hardness by varying the plasticizer to polymer ratio. For instance, this ratio for a coating formulation could be from 50:50 to 80:20 by weight, such as from 60:40 to 80:20 or 65:35 to 75:25 by weight.

In embodiments, the sum of the plasticizer and the polyhydroxyalkanoate may represent at least 50 %, preferably at least 75 %, more preferably at least 90% by weight of the composition. The advantage of this embodiment is the high concentration of the primary components, which contributes to the consistency and performance of the plastisol.

In embodiments, the plastisol composition may be solvent-free. In embodiments, the plastisol composition may further comprise a diluting solvent that is characterized by not being able to dissolve polyhydroxyalkanoate and by being miscible with the plasticizer. This embodiment provides the advantage of adjusting the viscosity of the plastisol without compromising its stability. The amount of solvent is preferably at most 10 wt%.

In embodiments, the diluting solvent may be selected from ethanol, methyl ethyl ketone, and ethylacetate. Other diluting solvents based on naphtha work as well but are deemed less environmentally friendly. The advantage of this embodiment is the use of solvents that are effective in viscosity adjustment and are compatible with the other components of the plastisol.

In embodiments, the plasticizer may be a polymer having an Mn of at least 1000 g/mol. The advantage of this embodiment is the reduced migration of the plasticizer due to its higher molecular weight, which is beneficial for the longevity and stability of the final product.

In embodiments, the plastisol composition may be for forming a coating, wherein the ratio of plasticizer to polyhydroxyalkanoate is in the range of 50:50 to 80:20, preferably 60:40 to 75:25 by weight.

In embodiments, the plastisol composition may be for forming a pressure-sensitive adhesive, wherein the ratio of plasticizer to polyhydroxyalkanoate is in the range of 80:20 to 90:10 by weight. In these embodiments, a tackifier may be present in an amount of from 0.1:100 to 50:100 by weight with respect to the total weight of the polyhydroxyalkanoate, the plasticizer, and the tackifier. This embodiment provides the advantage of enhanced adhesive properties for the pressure-sensitive adhesive.

In embodiments, the polyhydroxyalkanoate may be PHBHHx. This is particularly advantageous for compositions for the formation of pressure-sensitive adhesives.

In embodiments, the plasticizer may be sucrose acetate isobutyrate. This is particularly advantageous for compositions for the formation of pressure-sensitive adhesives where it provides good compatibility and performance.

In embodiments, the plastisol composition may comprise a nucleating agent. This is advantageous because it improves crystallization. Preferably, the nucleating agent comprises talc, more preferably talc with grain size from 0.5 to 10 µm. This is advantageous as it leads to more crystals, smaller crystal sizes, and stronger films. Preferably, the concentration of the nucleating agent may be from 0.2% to 1% on total weight of the plastisol composition.

In the second aspect, the present invention relates to a method of making a plastisol composition according to any embodiments of the first aspect, comprising the steps of mixing a polyhydroxyalkanoate powder with a plasticizer.

In embodiments, the mixing may be performed under conditions of high shear. The advantage of this embodiment is the achievement of a homogeneous mixture, which is critical for the quality of the final plastisol composition. For instance, the mixing may be performed at a speed of 1000 rpm or higher. The advantage of this embodiment is a particularly efficient incorporation of the polyhydroxyalkanoate powder into the plasticizer, resulting in a consistent plastisol.
In embodiments, the mixing may last from 30s to 3 minutes. Such a mixing time is typically sufficient.
In embodiments, the mixing can be performed by processing the polyhydroxyalkanoate powder with a plasticizer in a roll mill. For instance, a three-roll mill or a double-roll mill can be used. In these scenarios, the polyhydroxyalkanoate powder are processed together with the plasticizer between counter-rolling rolls (e.g., ceramic rolls) to create fine dispersions. This is advantageous particularly when dealing with high-viscosity pastes. This approach is particularly beneficial when high shear is less desirable due to the viscosity of the paste.

In the third aspect, the present invention relates to a process of forming an object from the plastisol composition of any embodiments of the first aspect, comprising the steps of heating the composition to a temperature equal to at least 2°C below the melting point of the polyhydroxyalkanoate. Preferably, the temperature is equal to at least 1°C below the melting point of the polyhydroxyalkanoate, such as at least equal to the melting point of the polyhydroxyalkanoate. Preferably, the temperature is at most 10°C, more preferably at most 5°C above the melting point of the polyhydroxyalkanoate, yet more preferably at most 3°C above that melting point. This is advantageous as it leads to smaller crystals and stronger films.

In embodiments, the process may further comprise adding a nucleating agent to the plastisol composition either before or after heating it. This is advantageous because it can improve nucleation.

In embodiments, the heating may be performed from 1 seconds to 5 minutes. For coatings, it is preferably from 30 seconds to 5 minutes, more preferably from 40 seconds to 4 minutes, yet more preferably from 45 seconds to 3 minutes. For thermosensitive adhesives, e.g., for sealing purpose, a reheating of 1 to 20 seconds such as from 3 to 10 seconds is typically sufficient.

In embodiments, the process may comprise a step of applying the plastisol composition on a substrate by knife coating, transfer coating, screen printing, spraying, or dip-coating, prior to heating it at the temperature above the melting point of the polyhydroxyalkanoate. There is versatility in the application methods for the plastisol composition.

In embodiments, the process may comprise a step of shaping the heated composition. The advantage of this embodiment is the ability to form the plastisol into various shapes and forms, expanding its range of applications.

In embodiments, the heated composition may be calendered, screen printed, or casted in a mold. The advantage of this embodiment is the creation of objects with precise dimensions and properties tailored to specific applications.

In the fourth aspect, the present invention relates to the use of nucleating agents to speed up the crystallization of a plastisol composition according to the first aspect when it is cooling down after having been heated to a temperature equal to at least 10°C below the melting point of the polyhydroxyalkanoate.

In the fifth aspect, the present invention relates to an object. In embodiments, the object may be obtainable by the process of any embodiments of the third aspect.

In embodiments, the object may comprise a polyhydroxyalkanoate and a plasticizer. In embodiments, the object may be a molded object, wherein the object comprises a polyhydroxyalkanoate and a plasticizer. In embodiments, the object may be a coated product, wherein the coated product comprises a carrier provided with a polyhydroxyalkanoate film, wherein the film comprises a plasticizer. In embodiments, the coated product may be selected from the group consisting of artificial leather, pressure-sensitive adhesives, thermosensitive adhesives, and heat-sealable packaging materials.

In embodiments, the carrier may be selected from the group consisting of textiles, paper products, and non-woven materials. In embodiments, the textile may be selected from the group consisting of yarns, woven fabrics, knitted fabrics, and non-woven fabrics.

In embodiments, the paper product may be selected from the group consisting of packaging materials, labels, and decorative papers. The paper product is preferably clay-coated.

In embodiments, the polyhydroxyalkanoate film may comprise a polyhydroxyalkanoate selected from the group consisting of poly-3-hydroxybutyrate (PHB), poly(3-hydroxybutyrate-co-3-hydroxyvalerate) (PHBV), poly(3-hydroxybutyrate-co-4-hydroxybutyrate) (P3HB4HB), poly(3-hydroxybutyrate-co-3-hydroxyhexanoate) (PHBHHx), and combinations thereof.

In embodiments, the plasticizer in the polyhydroxyalkanoate film may be selected from the group consisting of sucrose acetate isobutyrate, acetylated oils (e.g., mono-, di-, or triglycerides), polymer-based esters of diacids, triacetin, isosorbate esters, citrate esters, and combinations thereof. Preferably, the plasticizer in the polyhydroxyalkanoate film may be selected from the group consisting of sucrose acetate isobutyrate, acetylated oils (e.g., mono-, di-, or triglycerides), polymer-based esters of diacids, and combinations thereof. This is advantageous because these have a lower tendency to migrate.

In embodiments, the polyhydroxyalkanoate film may further comprise a crosslinker reacted with hydroxyl groups. In embodiments, the crosslinker may be selected from the group consisting of polyisocyanates, polycarbodiimides functionalized with silanes, and combinations thereof.

In embodiments, the ratio of plasticizer to polyhydroxyalkanoate in the film may be in the range of 40:60 to 95:5 by weight. In embodiments, the ratio of plasticizer to polyhydroxyalkanoate may be in the range of 50:50 to 80:20 by weight, preferably 60:40 to 75:25 by weight. In embodiments, the coated product may be a pressure-sensitive adhesive and the ratio of plasticizer to polyhydroxyalkanoate is in the range of 80:20 to 90:10 by weight.

In embodiments, the plasticizer in the polyhydroxyalkanoate film is a polymer having an Mn of at least 1000 g/mol.

In embodiments, the object may be a coated textile obtainable by calendering or screen-printing the heated composition on a textile. The advantage of this embodiment is the production of textiles with enhanced properties, such as improved durability and aesthetic appeal.

In the sixth aspect, the present invention relates to a stratified object obtainable by laminating an object from the fifth aspect with a (e.g., further) substrate.
In the seventh aspect, the present invention relates to the use of the plastisol composition according to any embodiments of the first aspect for the coating of a textile or a paper product. The advantage of this aspect is the broad application potential of the plastisol composition in various industries.

It is an advantage of embodiments of the present invention that stable plastisol formulations can be created using polyhydroxyalkanoate (PHA) powders, for which we observed an exceptional capacity to absorb plasticizers and form transparent films from plastisols. It is a further advantage of embodiments of the present invention that the resulting coating pastes can be free from solvents and demonstrate stable viscosity ranges, making them highly suitable for various application processes such as coating, printing, and dipping. It is yet another advantage of embodiments of the present invention that the film formation is excellent, allowing for the incorporation of a wide array of additives and fillers to tailor the properties of the final product.

It is an advantage of embodiments of the present invention that the films obtained from PHA plastisols exhibit good properties and can show excellent biodegradability, especially when biodegradable plasticizers are utilized. It is a further advantage of embodiments of the present invention that the properties of the films can be significantly influenced by the type of PHA used, allowing for customization of the film characteristics for specific applications. It is also an advantage of embodiments of the present invention that the plastisols can be used in typical processes where plastisols are traditionally employed, demonstrating that the invention is a good alternative to soft PVC in many applications.

It is an advantage of embodiments of the present invention that it is amenable to high-quality pastes, especially when prepared with high shear mixing. It is a further advantage of embodiments of the present invention that the formulations can be adapted slightly towards different applications, as illustrated by examples for paper coating, textile coating, casting, adhesive coating, printing, yarn coating, and dip coating.

It is an advantage of embodiments of the present invention that by varying the processing temperature, control over the mechanical properties of the films can be adjusted. It is also an advantage of embodiments of the present invention that a wide variety of plasticizers are compatible with PHA, with some demonstrating particularly low migration rates and/or an ability to form strong films.

It is an advantage of embodiments of the present invention that it is compatible with typical additives such as crosslinkers, that can be added to increase the strength of the films or improve adhesion to substrates. It is a further advantage of embodiments of the present invention that the biodegradability of the films can be modulated by adding antimicrobial compounds, providing control over the environmental impact of the final product.

It is an advantage of embodiments of the present invention that the plastisol formulations can be tailored for specific uses such as paper coatings, textile coatings, artificial leather, pressure-sensitive adhesives, melt-films, wallpaper, and screen-printing ink, demonstrating the broad applicability of the invention in various industries. It is also an advantage of embodiments of the present invention that the processes for obtaining solid films can be integrated with heat processes to laminate the films to other substrates, further expanding the potential uses of the invention.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a graph showing the viscosity of the plastisol composition at various rotational speeds and plasticizer concentrations according to embodiments of the present invention.
Fig. 2 is a graph and a series of microscopic images illustrating the effect of curing temperature on the tensile strength and crystal size of PHBV plastisol films according to embodiments of the present invention.
Fig. 3 is a composite of two graphs demonstrating the correlation between plasticizer concentration and tensile strength, and comparing the migration rates of various plasticizers in films according to embodiments of the present invention.
Fig. 4 is a bar graph comparing the water absorption rates of different types of coated paper as measured by the COBB test according to embodiments of the present invention.
Fig. 5 is a photograph of artificial leather samples created by coating embossed casting paper with a PHBV plastisol according to embodiments of the present invention.
Fig. 6 is a pair of photographs showing a thermo-adhesive glue based on PHBHHx and SAIB, and its application on a medical bandage according to embodiments of the present invention.
Fig. 7 is an image displaying coated yarn and the resulting fiber-reinforced film after pressing with a composite press according to embodiments of the present invention.
Fig. 8 is a pair of photographs depicting the application of a PHBHHx coating based on a polymeric food contact approved plasticizer to a thin paper and the subsequent heat sealing to a molded paper cup, and the use of the heat seal paper in packaging flower seeds according to embodiments of the present invention.
Fig. 9 are two pictures capturing a two-step process in the creation of flowerpots using materials according to embodiments of the present invention.

In the different figures, the same reference signs refer to the same or analogous elements.

### Detailed description of Illustrative Embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps, or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures, and techniques have not been shown in detail in order not to obscure an understanding of this description.

The following terms are provided solely to aid in the understanding of the invention.

As used herein, and unless otherwise specified, the term "plastisol composition" refers to a composition that comprises a polyhydroxyalkanoate and a plasticizer. Typically, it is in a liquid or paste form at room temperature and can be converted into a solid or gel by heating. Examples of specific embodiments of plastisol compositions include those used for creating coatings, adhesives, inks, and sealants.

As used herein, and unless otherwise specified, the term "polyhydroxyalkanoate" refers to a group of naturally occurring biodegradable polyesters, composed of monomers containing hydroxyl and carboxylic acid functional groups, which are synthesized by various classes of microorganisms for energy storage. These bacteria typically generate PHAs inside the cell in the form of small particles, which can be extracted and purified. Different bacteria produce distinct types of PHAs. While these PHAs share a common molecular backbone, they vary in the length of their side chains. Specifically, it includes poly-3-hydroxybutyrate (PHB), poly(3-hydroxybutyrate-co-3-hydroxyvalerate) (PHBV), poly(3-hydroxybutyrateco-4-hydroxybutyrate) (P3HB4HB), poly(3-hydroxybutyrate-co-3-hydroxyhexanoate) (PHBHHx) and combinations thereof.

As used herein, and unless otherwise specified, the term "plasticizer" refers to a substance added to a material to increase its flexibility, workability, or distensibility. The plasticizers in the context of the present invention may for instance be selected from sucrose acetate isobutyrate, acetylated oils (e.g., mono-, di-, or triglycerides), polymer-based on esters of diacids, and combinations thereof. These substances can be incorporated into the plastisol composition to modify its physical properties.

As used herein, and unless otherwise specified, the term "biodegradable" refers to the ability of a material to decompose by biological means, especially by microorganisms, into water, carbon dioxide, and biomass. A biodegradable plasticizer is one that can be broken down in this manner.

As used herein, and unless otherwise specified, the term "crosslinker reactive with hydroxyl groups" refers to a chemical compound that can form bonds with hydroxyl (-OH) groups present in other molecules, thereby creating a networked or crosslinked structure. Examples of such crosslinkers include polyisocyanates and polycarbodiimides functionalized with silanes.

As used herein, and unless otherwise specified, the term "ratio of plasticizer to polyhydroxyalkanoate" refers to the proportionate relationship between the mass of plasticizer and the mass of polyhydroxyalkanoate in the plastisol composition. This ratio is expressed in terms of weight and can range from 40:60 to 95:5, with specific embodiments such as 50:50 to 80:20 for forming coatings, or 80:20 to 90:10 for forming pressure-sensitive adhesives. For molding, the ratio is preferably from 50:50 to 60:40 to reduce shrinking.

As used herein, and unless otherwise specified, the term "diluting solvent" refers to a liquid substance that is capable of reducing the viscosity of the plastisol composition without dissolving the polyhydroxyalkanoate. The diluting solvent should be miscible with the plasticizer and examples include ethanol, methyl ethyl ketone, and ethyl acetate. For PVC plastisols, similar naphtha-based solvents exist that also work in PHA plastisols, but are not environmentally friendly.

As used herein, and unless otherwise specified, the term "polymer having an Mn of at least 1000 g/mol" refers to a polymer with a number average molecular weight (Mn) of 1000 grams per mole or higher. This indicates a polymer of relatively high molecular weight used as a plasticizer in the plastisol composition.

As used herein, and unless otherwise specified, the term "tackifier" refers to a substance added to adhesives to increase their stickiness or tack. The amount of tackifier is expressed in relation to the total weight of the polyhydroxyalkanoate, the plasticizer, and the tackifier itself, with specific embodiments ranging from 0.1:100 to 50:100 by weight.

As used herein, and unless otherwise specified, the term "high shear" relates to a mixing process wherein the shear rate is at least 100 s⁻¹. Preferably, when mixing is performed under conditions of high shear in the present invention, it is performed at a shear rate of at least 500 s-1, more preferably at least 1000 s-1, yet more preferably at least 5000 s-1, and most preferably at least 10000 s-1. For instance, in the context of the present invention, high-shear mixing can be achieved by a rotor stator mixer at speeds of 1000rpm or higher or by another mixer type achieving equivalent shear.

As used herein, and unless otherwise specified, the term "object obtainable by the process" refers to any final product that can be produced using the process described, which includes but is not limited to coated textiles, stratified objects, and items laminated with various substrates.

As used herein, and unless otherwise specified, the term "use of the plastisol composition for the coating of a textile or a paper product" refers to the application of the plastisol composition onto textiles or paper products to impart desired properties such as durability, appearance, or functionality.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In the first aspect, the present invention relates to a plastisol composition comprising a polyhydroxyalkanoate (PHA) and a plasticizer. It offers a range of applications from coatings to pressure-sensitive adhesives. The polyhydroxyalkanoate may, for instance, be selected from poly-3-hydroxybutyrate (PHB), poly(3-hydroxybutyrate-co-3-hydroxyvalerate) (PHBV), poly(3-hydroxybutyrateco-4-hydroxybutyrate) (P3HB4HB), poly(3-hydroxybutyrate-co-3-hydroxyhexanoate) (PHBHHx) and combinations thereof. This allows the provision of a variety of material properties. The plasticizer can, for instance, be chosen from sucrose acetate isobutyrate (SAIB), acetylated oils (e.g., mono-, di-, or triglycerides), polymer based on esters of diacids, and combinations thereof. This allows for customization of the plastisol's properties. For plasticizers, the use of SAIB and acetylated oils is preferential due to their compatibility and performance with PHA powders.

The plasticizer may also be biodegradable. This contributes to the environmental benefits of the composition. A crosslinker reactive with hydroxyl groups, such as polyisocyanates and polycarbodiimides functionalized with silanes, can be included. This enhances the mechanical strength and durability of the final product. These crosslinkers are particularly functional towards hydroxylic groups, providing additional stability to the plastisol composition.

The ratio of plasticizer to polyhydroxyalkanoate can, for instance, be adjusted from 50:50 to 95:5 by weight to modify the flexibility and hardness of the plastisol. Plastisol formulations based on plasticizers with PHA powders in ranges of 40% plasticizer and 60% PHA powder till ratios of 95% plasticizer/5% PHA powder are encompassed within the scope of the invention. The primary components, plasticizer and polyhydroxyalkanoate, represent at least 50%, preferably at least 75%, and more preferably at least 90% by weight of the composition. This ensures consistency and performance.

A diluting solvent that does not dissolve polyhydroxyalkanoate but is miscible with the plasticizer, such as ethanol, methyl ethyl ketone, or ethyl acetate, can be used to adjust the viscosity of the plastisol. This does not compromise its stability. The plasticizer may be a polymer with an Mn of at least 1000 g/mol to reduce migration and enhance the longevity and stability of the final product. Any features of any embodiment of the first aspect may be independently as correspondingly described for any embodiment of any other aspect of the present invention.

In embodiments, the plastisol composition may be for forming a coating with a specific ratio of plasticizer to polyhydroxyalkanoate ranging from 60:40 to 80:20, and preferably 65:35 to 75:25 by weight. For coatings, a composition preferentially contains 70 parts plasticizer to 30 parts PHA powder, optimizing the balance between flexibility and strength.

In embodiments, plastisol composition may be for forming a pressure-sensitive adhesive, where the ratio of plasticizer to polyhydroxyalkanoate ranges from 80:20 to 90:10 by weight. For adhesives, a composition preferentially contains 80-90% plasticizer and 10-20% PHA powder, with the PHA being preferentially PHBHHx. A tackifier may be added in an amount of e.g., from 0.1:100 to 50:100 by weight with respect to the total weight of the polyhydroxyalkanoate. The plasticizer, and the tackifier, typically enhance the adhesive properties. For tackifier-free adhesives, the use of sucrose acetate isobutyrate as a plasticizer is preferential. Optionally, additional tackifiers can be used. This improves adhesion at higher shear strength.

The second aspect describes a method of making a plastisol composition by mixing a polyhydroxyalkanoate powder with a plasticizer. This is preferably performed under conditions of high shear, e.g., by using a rotor stator mixer at a speed of 1000 rpm or higher. This is advantageous as it ensures a homogeneous mixture and consistent plastisol.

Any features of any embodiment of the second aspect may be independently as correspondingly described for any embodiment of any other aspect of the present invention.

The third aspect involves a process of forming an object from the plastisol composition by heating it to a temperature above the melting point of the polyhydroxyalkanoate. The composition can be applied on a substrate by various methods such as knife coating, transfer coating, screen printing, spraying, or dip-coating. The applied composition can then be shaped by various methods such as calendering, screen printing, or the composition can be casted in a mold. Above formulations are suitable for use in knife coating, transfer coating, screen printing, spraying, dip-coating, preparing hot-melt compounds, or subsequent calendering. The processes above can obtain a solid film that can be laminated by heat processes to other substrates. Also, the formulations are also suitable for casting in molds.

Any features of any embodiment of the third aspect may be independently as correspondingly described for any embodiment of any other aspect of the present invention.

The fourth aspect relates to the use of nucleating agents to speed up the crystallization of a plastisol composition according to the first aspect when it is cooling down after having been heated to a temperature equal to at least 10°C below the melting point of the polyhydroxyalkanoate. PHA tends to crystallize slowly, and addition of nucleating agents can speed this up dramatically. Not all types of PHA are as prone to slow crystallization compared to others, and some like PHBHHx and P3HB4HB benefit more from the addition of nucleating agents to avoid tackiness during production. Hence, in embodiments, the polyhydroxyalkanoate of the sixth aspect may comprise PHBHHx or P3HB4HB. Concentrations of nucleating agents vary from none, to 0.2 - 1% on total weight of the formulation including plasticizer and PHA. Films also tend to be stronger when nucleating agent is added.

Any features of any embodiment of the fourth aspect may be independently as correspondingly described for any embodiment of any other aspect of the present invention.

The fifth aspect relates to an object. In embodiments, the object may be obtainable by the process of any embodiments of the third aspect.

In embodiments, the object may be a molded object, wherein the object comprises a polyhydroxyalkanoate and a plasticizer. In embodiments, the object may be a coated product, wherein the coated product comprises a carrier provided with a polyhydroxyalkanoate film, wherein the film comprises a plasticizer. In embodiments, the coated product may be selected from the group consisting of artificial leather, pressure-sensitive adhesives, and heat-sealable packaging materials.

In embodiments, the carrier may be selected from the group consisting of textiles, paper products, and non-woven materials. In embodiments, the textile may be selected from the group consisting of yarns, woven fabrics, knitted fabrics, and non-woven fabrics.

In embodiments, the paper product may be selected from the group consisting of packaging materials, labels, and decorative papers. The paper product is preferably clay-coated.

In embodiments, the polyhydroxyalkanoate film may comprise a polyhydroxyalkanoate selected from the group consisting of poly-3-hydroxybutyrate (PHB), poly(3-hydroxybutyrate-co-3-hydroxyvalerate) (PHBV), poly(3-hydroxybutyrate-co-4-hydroxybutyrate) (P3HB4HB), poly(3-hydroxybutyrate-co-3-hydroxyhexanoate) (PHBHHx), and combinations thereof.

In embodiments, the plasticizer in the polyhydroxyalkanoate film may be selected from the group consisting of sucrose acetate isobutyrate, acetylated oils (e.g., mono-, di-, or triglycerides), polymer-based esters of diacids, and combinations thereof.

In embodiments, the polyhydroxyalkanoate film may further comprise a crosslinker reacted with hydroxyl groups. In embodiments, the crosslinker may be selected from the group consisting of polyisocyanates, polycarbodiimides functionalized with silanes, and combinations thereof.

In embodiments, the ratio of plasticizer to polyhydroxyalkanoate in the film may be in the range of 40:60 to 95:5 by weight. In embodiments, the ratio of plasticizer to polyhydroxyalkanoate may be in the range of 50:50 to 80:20 by weight, preferably 60:40 to 75:25 by weight. In embodiments, the coated product may be a pressure-sensitive adhesive and the ratio of plasticizer to polyhydroxyalkanoate is in the range of 80:20 to 90:10 by weight.

In embodiments, the plasticizer in the polyhydroxyalkanoate film is a polymer having an Mn of at least 1000 g/mol.

In embodiments, the object may be a coated textile. The coated textile can, for instance, be produced by calendering or screen-printing the heated composition on a textile.

Any features of any embodiment of the fifth aspect may be independently as correspondingly described for any embodiment of any other aspect of the present invention.

The sixth aspect pertains to a stratified object obtainable by laminating an object from the fifth aspect with a substrate, while the seventh aspect highlights the use of the plastisol composition for coating textiles or paper products.

Any features of any embodiment of the sixth aspect may be independently as correspondingly described for any embodiment of any other aspect of the present invention.

Any features of any embodiment of the seventh aspect may be independently as correspondingly described for any embodiment of any other aspect of the present invention.

### Example 1: Development of Polyhydroxyalkanoate-Based Plastisol Compositions

The aim of the experiment was to develop stable plastisol formulations using polyhydroxyalkanoate (PHA) powders and plasticizers, which could be processed into solid films through various coating, printing, and dipping techniques. The significance of this experiment lay in the potential to create environmentally friendly, biodegradable films with excellent properties for a wide range of applications.

Materials such as PHA powders (e.g., PHB, PHBV, PHBHHx), various plasticizers (including biodegradable options like sucrose acetate isobutyrate and acetylated oils), crosslinkers (e.g., polyisocyanates), and other additives were utilized. Equipment included high shear mixers (e.g., Silverson), rotational viscometers, and thermal ovens for curing. The experimental setup involved preparing plastisol formulations with different ratios of PHA powder to plasticizer, followed by high shear mixing to achieve a homogeneous paste.

The method of making these plastisols benefits from high shear mixing. In a first step, the PHA powders are mixed in the plastisol at low speeds and typically agglomeration occurs. In a second step, high shear mixing is used with a typical high shear mixer (e.g., Silverson) or other mixing methods that have high agitation and shear. Such mixing step is typically short (30 seconds to 3 minutes is sufficient). Care was taken with high shear mixing that the temperature did not increase to the point where PHA particles melted together. A typical formulation contains no water and is therefore reasonably stable to microbial attack that would limit pot-life.

Depending on the plasticizer and PHA powder, different plastisol compositions could be made that form films ranging from 40% plasticizer and 60% PHA powder up to 95% plasticizer and 5% PHA powder. While a typical non-tacky coating formulation without solvent would contain 70% plasticizer and 30% PHA powder, for adhesive formulations the ratio is typically about 90% plasticizer and 10% PHA powder.

Results indicated that the viscosity of the plastisols decreased with increasing plasticizer content and rotational speed, demonstrating shear-thinning behavior.

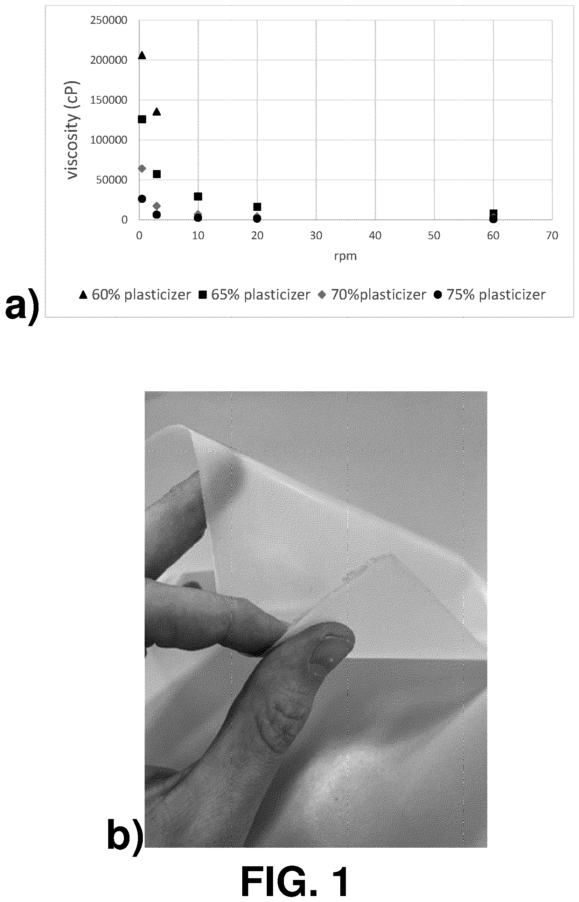

Referencing Fig. 1, the graph illustrates the relationship between the viscosity of the plastisol composition and the rotational speed of mixing at various plasticizer concentrations.

The data point sets correspond to "60%", "65%", "70%", and "75%" plasticizer, indicating the percentage of plasticizer present in the PHA samples being tested.

The x-axis measures rotational speed in revolutions per minute (rpm).

The y-axis measures viscosity in centipoise (cp).

Each data set corresponds to a different plasticizer concentration in the PHA being tested, ranging from 60% to 75%. The PHA tested in this case is a PHBV. Slightly different results can be obtained with other types of PHA and depend on the morphology of the PHA powder.

The graph shows how the viscosity of the plastisol changes with varying levels of plasticizer when subjected to different rotational speeds. Plasticizers are substances added to materials to increase their plasticity or fluidity. Typically, as the concentration of plasticizer increases, the plastisol becomes more pliable or less viscous, which seems supported by the data points on the graph: higher concentrations of plasticizer correspond to lower viscosities across the tested rotational speeds.

As rpm increases, there is a general trend of decreasing viscosity, which is consistent for all plasticizer concentrations. This suggests that the plastisol exhibits shear-thinning properties, where the viscosity decreases under the action of shear or stress, such as that induced by increasing rotational speeds. The graph provides a visual representation of this phenomenon and can be useful for understanding the flow properties of PHA plastisols with different plasticizer contents under dynamic conditions.

Advantageous tools for plastisols are the rheology modifiers. The same rheology modifying methods as exist with other plastisols work also with the PHA based plastisols. To increase viscosity a range of thickeners (both mineral or organic) or fillers can be increased in order to achieve a higher viscosity or thixotropic behavior. To lower viscosity, typically solvents are used that dilute the plasticizer, but do not dissolve the polymer powder. For PVC this is often naphtha or related toxic solvents, which although also useful for PHA, are not ecofriendly. We found that ethanol is particularly suitable, but other suitable solvents (aprotic, protic, polar, and apolar) solvents also work. In order to decrease viscosity, solvents are usually added in small amounts (≤10%). Adding a solvent may help to increase the amount of PHA powder that can be mixed into the plastisol. In addition, the use of small amounts of ethanol also omits the need for other antimicrobial additives.

Once obtained, the pastes were then applied to substrates and cured at temperatures above the melting point of the PHA powder. An example of a resulting film is shown in Fig. 1(b) where semitransparent film obtained after coating and gelation is displayed.

Application of the pastes can be done using different application methods including most commonly used coating (knife coating, transfer coating, kiss roll, curtain coating, dip coating, spray coating) and printing (notably screen printing) techniques. Formulations will, however, typically protrude in porous substrates like textiles and paper, which require either transfer coating or primer coatings that limit protrusion of formulation. To process the pastes into a solid film, the coatings need to be heated at or above the melting point of the PHA powder, this is different for each PHA powder (e.g., PHBV (ENMAT Y1000) has a melting point of 171°C, PHBHHx (BluePHA BP350) a melting point of 132°C). The obtained films remain thermoplastic and the possibility for thermal transfer, thermal adhesion patches, welding or embossing exists. The final films will depend on the chosen PHA type and plasticizer, but also the ratio between these two. Typical applications include coatings, prints and adhesives. The examples listed below show typical examples for paper coatings, textile coatings, artificial leather, pressure sensitive adhesives, melt-films, wallpaper, screen printing ink, but applications are not limited to these.

Films formed from these plastisols showed varying properties depending on the PHA type and plasticizer ratio. For instance, PHBV-based plastisols formed non-tacky, fast-crystallizing films, while PHBHHx-based plastisols were tackier and suitable for pressure-sensitive adhesives.

It was found that the processing temperature has an effect on the degree of crystallization and degradation of PHA. In fact, PHA degrades rapidly at elevated temperatures and therefore, processing time at high temperatures are preferably kept short. For PHBV we found the strength of the films was directly related to the processing temperature, which appears to be linked to the size of the crystals that have a remarkably different size when processed at 171°C (very small crystals) or at 180°C (very large crystals) which could be seen easily by polarization microscopy. Linked to this also the strength of 50µm thick films lowered from 12N when processed at 170°C to 6N when processed at 180°C.

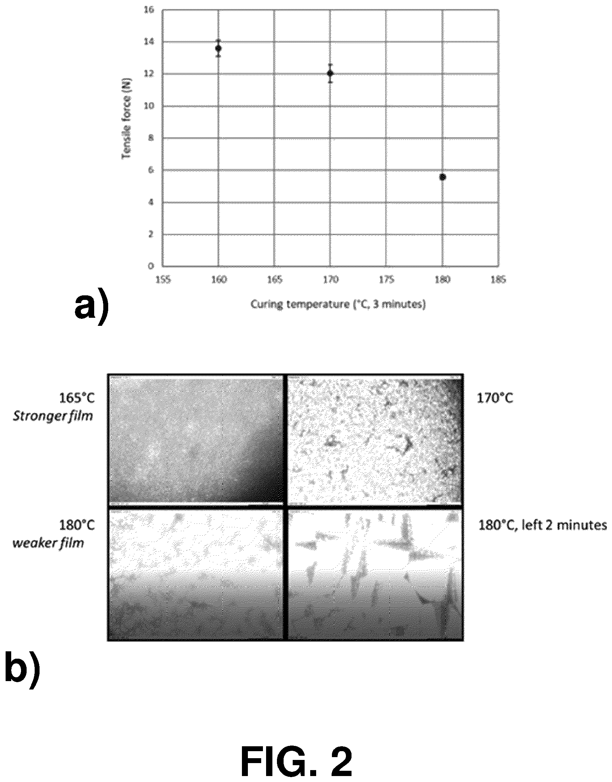

Fig. 2 a) presents a comparative analysis of the impact of curing temperature on the physical properties and microstructure of PHBV plastisol. On the left, a graph depicts the tensile force in Newtons as a function of curing temperature in degrees Celsius, measured after a 3 minutes curing. The graph reveals a peak in tensile strength at approximately 165°C, indicating this is the optimal curing temperature for achieving maximum strength. As the temperature increases to 180°C, there's a notable decrease in tensile strength, suggesting a degradation of material properties beyond the optimal curing point or a relation between the crystal size which is remarkably larger for samples processed at 180°C.

In Fig. 2 b), a series of microscopic images visually represent the PHBV 's microstructure at various temperatures: 165°C, 170°C, and two at 180°C, with the latter also noting an extended time of 2 minutes. At 165°C, the image denotes a "Stronger film" with a uniform and fine microstructure. Increasing the temperature to 170°C, the PHBV particles within the material appear larger and less dense. The two images at 180°C illustrate a "weaker film" with significantly larger crystals, particularly in the image where the plastisol was left for an additional 2 minutes, implying that both higher temperatures and prolonged exposure lead to coarser microstructures.

The combined data from the graph and microscopic images elucidate that the tensile strength of the material is intrinsically linked to its curing temperature and time, with higher temperatures and longer curing times leading to larger crystal formations within the material and a consequent reduction in mechanical strength.

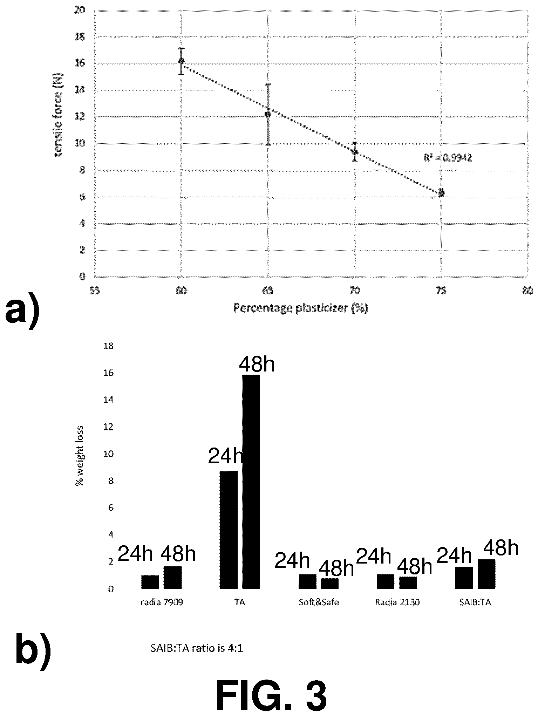

The choice of plasticizer has an influence on the properties and a wide variety of plasticizers seem to be compatible with PHA. Nonetheless, given the high amount of plasticizer added, migration can occur. Because PHA itself is highly biodegradable, specific interest exists to also chose biodegradable plasticizer, but also non-biodegradable and synthetic plasticizers work well with PHA. Two types of plasticizers with low molecular weight displayed lower migration rates as tested in a migration test (ISO 177:2016, migration of plasticizers) being acetylated oils (e.g., acetylated mono, di, or triglycerides) and sucrose acetate isobutyrate (SAIB). Other biodegradable plasticizers that worked, but sometimes gave more migration are triacetin, isosorbate esters and citrate esters. In order to improve the processability of SAIB, which may be difficult because of its high viscosity, it can be blended with a different plasticizer (e.g., from 85 to 95 wt% SAIB, e.g., 90 wt% SAIB and from 5 to 15 wt% triacetin, e.g., 10 wt% triacetin) or with a suitable diluting solvent (e.g., from 85 to 95 wt% SAIB, e.g., 90 wt% SAIB and from 5 to 15 wt% ethanol, e.g., 10 wt% ethanol). Analysis of the films revealed that the tensile strength was inversely proportional to the plasticizer content, with higher plasticizer ratios leading to weaker films. This is shown in Fig. 3 a). Fig. 3 a) is a scatter plot with a line of best fit. It demonstrates the correlation between the percentage of plasticizer and the tensile force in Newtons. The plot shows a negative trend, indicating that as the percentage of plasticizer increases, the tensile force required to break the film decreases. The correlation is strong, as evidenced by the high R-squared value of 0.9942, nearly 1, which implies that the fit of the trendline to the data is very good.

In Fig. 3 b), a bar graph compares the percentage weight loss of various plasticizers of low molecular weight over 24 and 48 hours, which is indicative of their migration rate from the film, tested according to IS0177:2016. The plasticizers examined include acetylated fatty acids (radia 7909), sucrose acetate isobutyrate (SAIB), and a combination of SAIB and triacetin (TA) at a ratio of 4:1. Radia 7909 and Soft&Safe show low migration rates, as seen by the shorter bars. TA alone has a higher migration rate, indicated by the tallest bar. The combined SAIB:TA plasticizer shows a moderate migration rate, higher than radia 7909 and Soft&Safe but lower than TA alone. The migration rates generally increase from 24 to 48 hours for all plasticizers tested.

The combined data from both graphs provide insights into the mechanical properties and stability of films with different plasticizer contents. A higher plasticizer percentage leads to a more pliable film with less tensile strength, and certain plasticizers are more prone to migration over time, which could impact the film's performance and longevity.

Migration tests showed that certain plasticizers, such as acetylated oils and SAIB, had lower migration rates, making them preferable for long-term stability. For the acetylated oils, certain plasticizers such as acetylated forms of castor oil or its derivates (e.g., grindsted soft n' safe, supplied by international flavors & fragrances) have much less smoke formation compared to other acetylated oils and are therefore particularly useful in combination with PHA types that have a higher melting point such as PHBV.

Typical additives that would increase the strength of the films or the adhesion of the films to the substrates are crosslinkers. Crosslinkers that work well are those that react with functional hydroxylic groups such as (poly)isocyanates, silane functionalized polycarbodiimides and silanes. Silanes can also be used to add other functional groups using, e.g., aminosilanes. Especially (poly)isocyanates were found to also increase strength of the coatings and barrier properties such as a lower water vapor permeability when they are added to the coating formulation. The addition of crosslinkers improved the strength and barrier properties of the films.

A range of other additives can be added to the plastisols which include pigments & dyes, fillers, antistatics, antimicrobials, matting agents, flame retardants, water & oil repellents, etc. Such additives can give additional properties to the films and prints. Interesting is to see that the biodegradability of the films can be slowed down by adding antimicrobial compounds to the film. While a regular PHBV film made from the plastisols biodesintegrates fully in 29 days (soil burial 28°C in compost), this was after 50 days when 0.5% of the antimicrobial compound curcumin was added.

In conclusion, the experiment successfully demonstrated that PHA-based plastisols could be tailored to produce films with desirable properties for various applications. The findings highlighted the importance of selecting the appropriate PHA type, plasticizer, and additives to achieve the required performance, offering a promising alternative to traditional PVC plastisols.

The results of this experiment have significant implications for the development of biodegradable materials in the coatings industry, providing a sustainable option that does not compromise on quality or functionality.

### Example 2: Optimization of PHA Plastisol Formulations for Paper Coating Applications

The objective of this experiment was to optimize a plastisol formulation based on PHA powders for paper coating applications, aiming to enhance barrier properties and reduce water or oil absorption.

Materials included PHBV powder (Enmat Y1000), a plasticizer blend of 90% sucrose acetate isobutyrate and 10% ethanol (Sustane SAIB ET-10), and an optional crosslinker (Desmodur CQ N 7300). A dispersion disk, high shear mixer (Silverson L5M-A), and a thermal oven were used for the preparation and curing of the coating paste.

| commercial name | product type | formulation (parts) |
|---|---|---|
| Enmat Y1000 (TianAn Biopolymers) | PHBV powder | 30 |
| sustane SAIB ET-10 (Eastman) | 90% sucrose acetate isobutyrate and 10% ethanol | 70 |
| desmodur cq N 7300 (Covestro) | polyisocyanate | 5 |

PHA powder (Enmat Y1000) was added to plasticizer using a dispersion disk at low speeds. Next a high shear mixing step is used to achieve a high-quality coating paste. High shear mixing was done using a silverson L5M-A mixer at speeds of 11.000 rpm for 2 times 1.5 minutes. After high shear mixing, a crosslinker (desmodur CQ N 7300) was added to the formulation, even though this compound is optional.

Coating was done on clay-coated paper as without a clay-coating, such formulation would protrude into paper. Other suitable pre-coatings include these based on polyvinyl alcohol. The polyisocyanate compound was added after high shear mixing, even though addition of such compound is optional. Coatings were made in a thickness of 100µm and were gelated and cured at 170°C for 3 minutes.

Clear coatings were obtained with good barrier properties as seen in water absorption (>95% reduction in water absorption as measured by COBB120), and an excellent value in oil resistance (value 12 in the TAPPI T559 test).

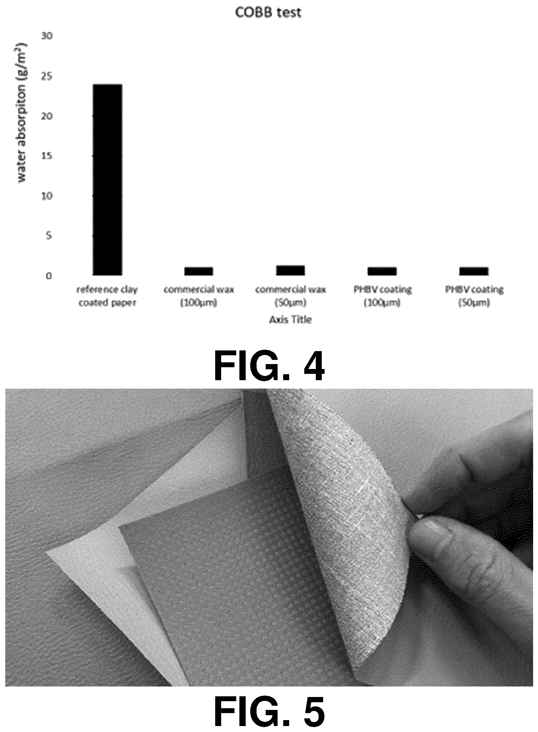

We now refer to Fig. 4. The figure presents data from a COBB test, which is a measure of water absorption by paper and board materials. The image includes a bar graph that describe the performance of various coatings in terms of their barrier properties.

The bar graph labeled 'COBB test' compares the water absorption rates, in grams per square meter (g/m²), of different types of coated paper. The reference clay-coated paper shows the highest water absorption, significantly more than the other materials tested, suggesting it has the least effective barrier against water. Two types of commercial wax coatings, one at 100µm and the other at 50µm thickness, demonstrate a reduction in water absorption, with the thicker coating performing slightly better, indicating that wax coatings can effectively reduce water permeability and that increased thickness improves performance. The PHBV coatings at 50 and 100µm thickness displays a comparable water absorption to the 100µm commercial wax, suggesting it is a highly effective barrier at these thicknesses. These PHBV coatings also show interesting potential as water vapor barrier, a PHBV coating at 50µm thickness displays a water vapor transmission rate of 11 gram/(m² day), measured at 6°C and 85% relative humidity.

The graph highlights the effectiveness of PHBV coatings in providing a good barrier against water and oil, which is advantageous for applications where moisture and grease resistance are required. The clear coatings developed have demonstrated significant improvement over traditional clay-coated paper, indicating their potential for use in packaging materials or other applications where barrier properties are critical.

### Example 3 typical formulation for a textile coating

This is a typical example where the coating is a transfer coating for use as artificial leather, but such coating may also be applied in other thicknesses, with other plasticizers or in multilayered coatings.

| **commercial name** | **product type** | **formulation** |
|---|---|---|
| Enmat Y1000 (TianAn Biopolymers) | PHBV powder | 60g |
| Grindsted soft'n'safe (IFF) | acetylated castor oil | 140g |
| tronox 826 (Tronox) | titanium dioxide | 8g |
| nubifer iron oxide red (Ferro) or nubiperf G-58 ultramarine blue (Ferro) | red pigment or blue pigment | 8g |
| demodur DN (covestro) | polyisocyanate crosslinker | 5g |

PHA powder (Enmat Y1000) was added to plasticizer using a dispersion disk at low speeds, pigments (titanium dioxide and iron oxide) are added to this formulation. Next a high shear mixing step was used to achieve a high-quality coating paste. High shear mixing was done using a silverson mixing head at speeds of 11.000 rpm for 2 times 1.5 minutes. After high shear mixing, a crosslinker (desmodur DN) was added to the formulation, even though this compound is optional.

Coating was done of embossed casting paper (Sappi) in a thickness of 500µm and the coatings were gelated and cured in a thermal oven during 3 minutes at 170°C. After cooling a solid film on the casting paper is achieved. To transfer to a textile (non-woven, knitted or woven), these were simply calenderer onto the coating at a temperature of 170°C.

The resulted artificial leather was flexible and non-tacky. When buried in soil, the coatings disappeared after 2 to 3 weeks, coatings could be combined with a lacquer coating to limit migration of the plasticizer. In open air, coatings resist to weathering well for up to 3 months before microbial growth was seen to attack the coatings. UV-resistance was good with no reduced strength after testing up to 90 hours of UV-exposure (QUV test).

To increase flexibility, the same formulation can be taken where half of the PHBV powder is blended with PHBHHx powder (BP350 by BluePHA), as this type of PHA has a better flexibility. In this case, 0.5% crys-talc 7 (Imerys) is preferably added as nucleating agent.

We now refer to Fig. 5. The picture showcases a selection of materials that are examples of artificial leather. The artificial leather in view is created through the process of coating an embossed casting paper, specifically made by Sappi, with a PHBV plastisol. This demonstrates that PHBV can serve as an eco-friendly alternative to traditional PVC in the production of synthetic leather.

Three samples are presented, with the topmost sample partially rolled back to reveal the samples beneath. This demonstrates the flexibility and the strength of the bond between the coating and the substrate. The visible texture of the artificial leather is intricate, suggesting a high-quality embossing process that creates a pattern mimicking the natural grain of genuine leather.

The colors of the artificial leather samples are varied, indicating the versatility of the coating process in producing different aesthetic finishes. One can see a metallic sheen on the blue top sample, which adds a luxurious quality to the material. The underlying layers have a matte finish with a warm, earthy tone, and a textured surface that enhances the tactile quality of the material, which is characteristic of embossed leather.

The material is pliable and has a degree of softness, important qualities for artificial leather used in fashion or upholstery. This demonstrates a successful application of PHBV plastisol in creating a leatherlike material that is not only visually appealing but also potentially more sustainable than traditional synthetic leathers.

### Example 4 typical formulation for a screen-printing paste

The same formulation as in example 3, but a thixotropic thickener (BYK-7410-ET) was added in a 3% concentration and the crosslinker was replaced by Imprafix 2794 (Covestro) for longer potlife. Formulations benefited from an additional high shear mixing (another 2 times 1.5 minutes) and the selected screens had a relatively high open mesh (sefar mesh 32-70). After printing, the prints were cured at 170°C for 3 minutes.

### Example 5 typical coating for a tackifier-free pressure sensitive adhesive

A typical formulation would require higher amounts of plasticizer. When a tacky plasticizer is used no tackifiers are needed, but other formulations with tackifiers also exist.

| **commercial name** | **product type** | **formulation (parts)** | | **Tackifier-free fromulation** | |
|---|---|---|---|---|---|
| sustane SAIB ET-10 (Eastman) | 90% sucrose acetate isobutyrate and 10% ethanol | | 95.7 | | 91 |
| Foral AX-E (Eastman) | Tree rosin (dehydrogenated) as tackifier | | 27.9 | | |
| Ethanol (Carl Roth) | Solvent that dilutes the plasticizer without dissolving PHA | | 9.6 | | 9 |
| BP350 (BluePHA) | PHBHHx powder | | 16.8 | | 10 |

Prior to preparing coatings pastes as in example 2, the tackifier was dissolved in the plasticizer by using heat and gentle mixing. After cooling ethanol was added to lower the viscosity. Further processing was done as in example 2. This formulation can be coated directly on CCK paper, cured at 140°C for 2 minutes in order to make self-adhesive paper labels.

A tackifier-free formulation can be made by combining SAIB in even higher concentrations with PHBHHx. Such paste was applied on a pretreated non-woven and supplied with a padding. PHBHHx was cured at 140°C for 2 minutes. The carrier and padding materials were chosen in regenerated cellulose (lyocell) so that the bandage was fully biodegradable.

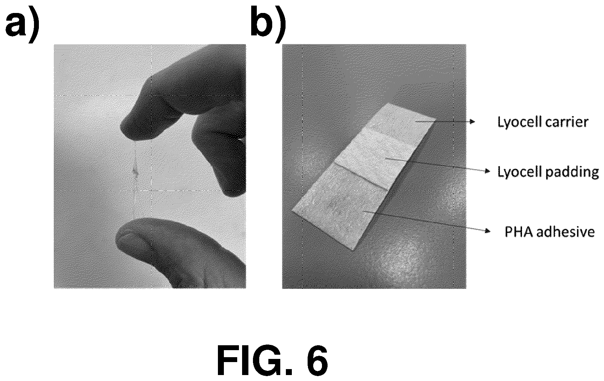

We now refer to Figure 6. The image presents two photographs side by side. On the left, we see a close-up of a person's fingers pulling apart a clear, stretchy substance that demonstrates the typical properties of a thermo-adhesive glue. This glue is based on PHBHHx and SAIB.

On the right, there is an image of a medical bandage, with its layers labeled to show the construction. The top layer is a Lyocell carrier, which is a smooth, woven fabric that provides structure to the bandage. Beneath that is the Lyocell padding, which is a nonwoven, fluffy layer designed to cushion and protect a wound. The bottom layer, labeled as PHA adhesive, indicates that the same type of adhesive depicted on the left is used to coat this bandage, serving to adhere the bandage to the skin.

The bandage has good sticking power while being easy to remove, qualities that are advantageous for medical bandages. The pictures demonstrate a functional and innovative use of materials of the invention in medical applications. Medical active compounds, fragrances or cosmetical additives could be added as optional ingredients.

### Example 6 yarn coating

For yarn coatings a formulation without solvent is preferred as solvents may lead to entrapped air bubbles in the coated yarns.

| **commercial name** | **product type** | **formulation (parts)** | |
|---|---|---|---|
| Enmat Y1000 (TianAn Biopolymers) | PHBV powder | | 30 |
| Radia 2130 (Oleon) | acetylated oil | | 70 |
| demodur DN (Covestro) | polyisocyanate crosslinker | | 5 |

The plastisol was made with the above ingredients following the same method as in example 2. The paste was applied to a flax yarn (sofilin) using a pultrusion device and the coating was cured in an oven at 180°C for 45 seconds before cooling down and winding on a bobbin.

The coatings were even and adhesion to the flax yarn was good. In a subsequent step, the yarn could be spooled onto a frame and pressed into a small composite film where the coatings were the meltresin, which remained reinforced by the flax yarn.

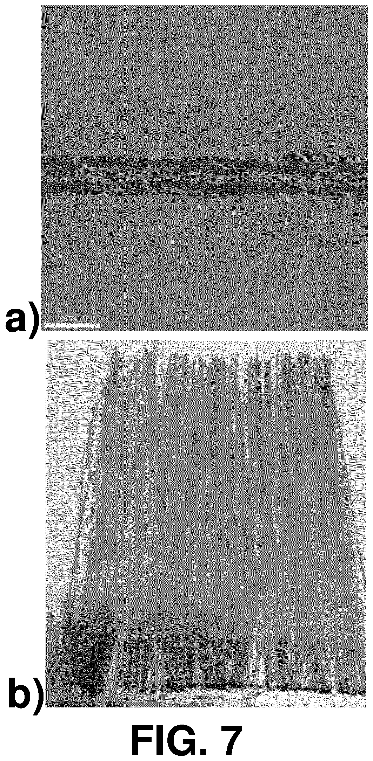

We now refer to Fig. 7. The image displays two distinct stages in the production of a fiber-reinforced film. Fig. 7 a) is a close-up of a single strand of coated yarn. This coating is a preparatory step before the yarn is integrated into a larger structure. The scale at the bottom indicates a magnification level and provides a reference for the yarn's thickness.

In Fig. 7 b), we see the transformation of individual yarns into a cohesive material. The yarns are laid out side by side to form a mat-like structure, and this assembly has been subjected to a pressing process. Through this pressing, at elevated temperatures, the coatings on the individual yarns have melted and fused together, creating a unified film reinforced by the embedded fibers. This film shows a textured surface where the yarns maintain their linear orientation, providing reinforcement along their length.

The pressing process is done with a composite press, which melds the coatings of the yarns, fusing them into a single, robust film. This method is common in composite material fabrication, where reinforcement fibers are combined with a matrix material to form a strong, lightweight product. The resultant fiber-reinforced film has enhanced properties, such as increased tensile strength and durability, making it suitable for various applications in industries where such characteristics are desirable.

### Example 7 mold casting

| **commercial name** | | **product type** | **formulation (parts)** |
|---|---|---|---|
| | Enmat Y1000 | PHBV powder | 40 |
| | Radia 7909 | acetylated oil | 60 |

The compounds were added to a heating pan and left to melt at 170°C. Once molten, a very lowly viscous solution was obtained that was used to cast flowerpots in silicone molds. Interestingly, compositions with more than 40 parts PHA powder per 60 parts of plasticizer tended to shrink more upon cooling down. The formulation also allowed for high loadings of cheap fillers such as lignin.

### Example 8: use of a polymeric plasticizer in food contact approved heat seal coatings

Polymeric plasticizers can be a smart choice of plasticizer because they have an increased molecular weight and are thereby hindered to migrate out of the coatings. This is especially relevant in applications where migration is an issue, such as food contact applications (e.g., heat seal coatings, barrier coatings). As polyhydroxyalkanoates, in general, display good barrier properties, it is a good candidate for packaging materials where the content of the packaging needs to be protected from oxygen, moisture or other environmental impacts. In many cases these are food applications. However, there is a tight regulation on migration of components from the packaging into food and if this occurs migration must be minimal, and the components must be food contact approved. This is the case for polymeric plasticizers, especially from the class of polymerized di-acids. These di-acids are easily polymerized with a diol in the presence of a catalyst in common chemical reactors. Therefore, a range of polymeric plasticizers exist based on a dicarboxylic acid (e.g., the biobased sebacate or succinate or the cheaper fossil based adipates or phthalates) and a diol (e.g., 1,4-butane diol, ethylene glycol, diethylene glycol, 2-methyl-1,3 propane diol or mixed diols). The resulting polymeric plasticizer can be fully biobased and with increasing reaction times has an increasing molecular weight. Such plasticizers are not highly complicated to produce, and multiple suppliers exist on the market (e.g. BASF, Eastman, Hallstar, Emery oleochemicals, etc.). These plasticizers display an exceptionally low migration rate because their size hinders an easy migration from the coatings and many of them also received food contact approval by the FDA or Europe's EC 1935/2004. In the case of PHA plastisols, we tested a broad range of such polymeric plasticizers from different suppliers (e.g. Hallgreen R-8010 (polysebacate) (Hallstar), Edenol 2178 (polysebacate), Edenol 2192 (polysebacate), Edenol 1208 (polyadipate), Edenol 1212 (polyadipate) (Emery oleochemicals), CAD010SuZX (polysuccinate) (Gantrade)) and all these plasticizers are highly compatible with the PHA coatings. Those that have a higher molecular weight displayed no detectable migration and some are also registered for food contact approval.

| Component name | Function | Parts (weight-unit) |
|---|---|---|
| Hallgreen R-8010 (Hallstar) | Food contact approved polymeric plasticizer | 70 |
| ethanol | Viscosity reducing solvent that is not capable to dissolve PHA | 10 |
| BP350 (BluePHA) | PHBHHx polymer powder | 30 |

The compounds were mixed together with dispersion disk until a homogeneous solution is obtained. High shear was applied (2 times 30 seconds) taking in mind not heating the solution over 50°C. The coating paste was applied to CCK paper (50gsm) in a thickness of 50µm. The resulting coating was 42gsm and had excellent heat seal properties as tested on both cardboard, molded pulp and plastics. A seal temperature of 120°C for 5 seconds on paper was sufficient to achieve a good adhesion with low pressure (4 kPa). When trying to delaminate the sealed paper from the cardboard, a fiber tear failure was detected, indicating good adhesive properties. The coating neither displayed any migration effects as tested with printed copy-paper methods where no latex inks were transferred due to affinity to mobile plasticizers.

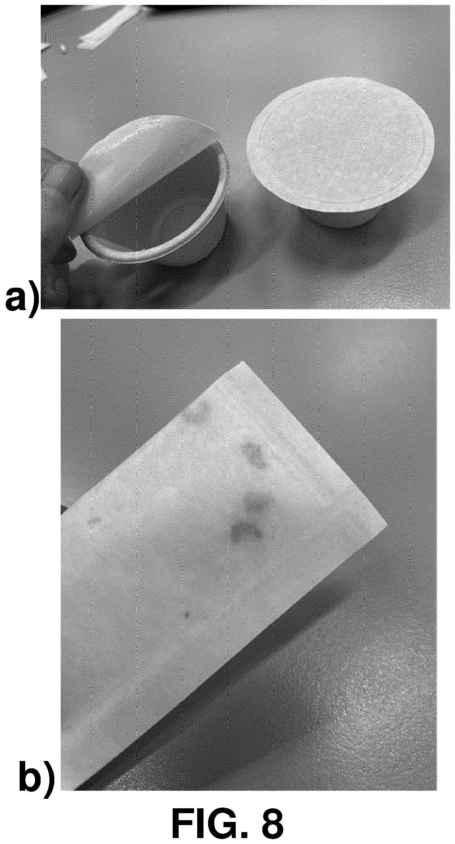

We now refer to Fig. 8 a) where a PHBHHx coating based on a polymeric food contact approved plasticizer is applied to a thin paper and subsequently heat sealed to a molded paper cup. We observe a person holding a lid that has been separated from a paper cup. The lid has a coating, which is PHBHHx-based, and is designed to adhere to the cup through heat sealing. The cup itself is made from molded paper, and it is intended for use with food or beverages. The coating has been applied to a thin paper, which is consistent with the described characteristics such as excellent heat seal properties and a specific coating weight of 42gsm. The seal appears clean, indicating that the heat-sealing process at 120°C for 5 seconds was effective. We now refer to Fig. 8 b) where the heat seal paper can easily be sealed using commonly used heat-sealing equipment to close packaging, in this case demonstrated in a packaging of flower seeds. It shows a closer view of the coated paper.

Together, these images demonstrate the application and efficacy of a PHBHHx-based coating on paper materials, highlighting its strong adhesive qualities through heat sealing and its resistance to substance migration, which are critical in food packaging applications. The described use for packaging flower seeds also suggests a versatility beyond direct food contact applications. The packaging material is also biodegradable and could therefore be buried together with the seeds without polluting soil.

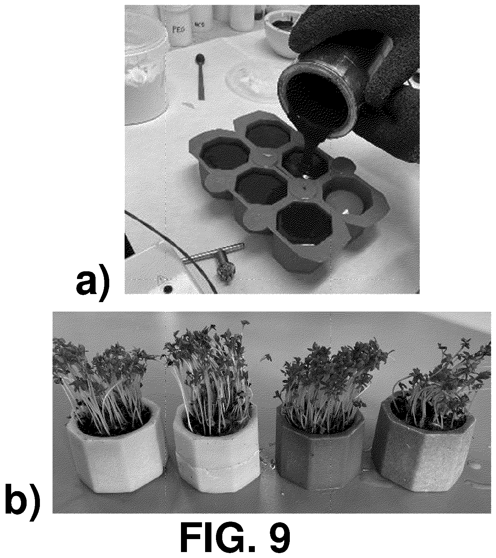

We now refer to Fig. 9. The image captures a two-step process in the creation of flowerpots using open mold casting. In Fig. 9 a), the photo shows a person in the act of pouring a molten plastisol into a hexagonally arranged silicone mold. The plastisol is infused with colorants to achieve the desired hue. Protective gloves are worn during the process, emphasizing the safety precautions taken when handling hot materials.

Transitioning to Fig. 9 b), we see the successful result of such casting-the production of cylindrical flowerpots, which are displayed in a row. These pots are being utilized for their intended purpose, each housing a small cluster of thriving green plants. The sequence from mold to functional product illustrates the simplicity yet effectiveness of the open mold casting technique applied to the plastisols of the present invention for crafting customized and aesthetically pleasing objects. This method is particularly valued for its ability to produce designs with intricate details and vibrant colors.

It is to be understood that although preferred embodiments, specific constructions, and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A plastisol composition comprising a polyhydroxyalkanoate and a plasticizer.

2. The plastisol composition according to claim 1, wherein the polyhydroxyalkanoate is selected from the group consisting of poly-3-hydroxybutyrate (PHB), poly(3-hydroxybutyrate-co-3-hydroxyvalerate) (PHBV), poly(3-hydroxybutyrate-co-4-hydroxybutyrate) (P3HB4HB), poly(3-hydroxybutyrate-co-3-hydroxyhexanoate) (PHBHHx) and combinations thereof

3. The plastisol composition according to any one of the preceding claims, wherein the plasticizer is selected from the group consisting of sucrose acetate isobutyrate, acetylated oils, esterbased plasticizers, and combinations thereof.

4. The plastisol composition of any one of the preceding claims, further comprising a crosslinker reactive with hydroxyl groups.

5. The plastisol composition according to any one of the preceding claims, wherein the ratio of plasticizer to polyhydroxyalkanoate is in the range of 40:60 to 95:5 by weight.

6. The plastisol composition according to any one of the preceding claims, wherein the sum of the plasticizer and the polyhydroxyalkanoate represents at least 50 %, preferably at least 75 %, more preferably at least 90% by weight of the composition.

7. The plastisol composition according to any one of the preceding claims, further comprising a diluting solvent that is **characterized by** not being able to dissolve polyhydroxyalkanoate and by being miscible with the plasticizer.

8. The plastisol composition according to claim 7, wherein the diluting solvent is selected from ethanol, methyl ethyl ketone, and ethylacetate.

9. The plastisol composition according to any one of the preceding claims wherein the plasticizer is a polymer having an Mn of at least 1000 g/mol.

10. A method of making a plastisol composition according to any one of the preceding claims, comprising the steps of mixing a polyhydroxyalkanoate powder with a plasticizer.

11. The method of claim 12, wherein the mixing is performed under conditions of high shear.

12. A process of forming an object from the plastisol composition of any one of the preceding claims, comprising the steps of heating the composition to a temperature equal to at least 2°C below the melting point of the polyhydroxyalkanoate.

13. An object comprising a polyhydroxyalkanoate and a plasticizer.

14. The object of claim 13 selected from a molded object and a coated product, wherein the coated product comprises a carrier provided with a polyhydroxyalkanoate film, wherein the film comprises a plasticizer.

15. The object of claim 14, wherein the coated product is be selected from the group consisting of artificial leather, pressure-sensitive adhesives, thermosensitive adhesives, and heat-sealable packaging materials.
